# EUROPÄISCHE PATENTANMELDUNG

(11) **EP 4 442 618 A1**
(43) Veröffentlichungstag der Anmeldung: **09.10.2024**
(21) Anmeldenummer: 24164038.2
(22) Anmeldetag: 18.03.2024
(51) Int. Cl.: B65G 17/00

(54) **TRAGPLATTENLINIENVERTEILER ZUM VERTEILEN VON FÖRDERGUT VON EINER SPUR AUF MEHRERE SPUREN**

(30) Priorität: 30.03.2023 DE 102023108171
(71) Anmelder: MULTIVAC Sepp Haggenmüller SE & Co. KG, 87787 Wolfertschwenden (DE)
(72) Erfinder: BEHR, Markus, 87488 Betzigau (DE); GABLER, Albert, 87760 Lachen-Albishofen (DE); HUBER, Michael, 87764 Maria Steinbach (DE); MAGEL, Thomas, 87487 Wiggensbach (DE); WASSERMANN, André, 87730 Bad Grönenbach (DE)
(74) Vertreter: Grünecker Patent- und Rechtsanwälte PartG mbB

(57) **Zusammenfassung**

Tragplattenlinienverteiler (100) zum Verteilen von Fördergut (130) von einer Spur (151) auf mehrere Spuren (153, 154, 155), der Tragplattenlinienverteiler (100) umfassend einen Fördergurt (101), wenigstens eine auf dem Fördergurt (101) angeordnete und quer zu einer Förderrichtung (T) des Fördergurts beweglich angeordnete Tragplatte (131) mit wenigstens einem Führungselement (132), eine Führung (105) zum Führen der wenigstens einen Tragplatte (131) mittels des Führungselements (132), wobei die Führung einen einspurigen Bereich (151), einen in Förderrichtung (T) stromab angeordneten mehrspurigen Bereich (152) und eine Schaltweiche (261) umfasst, die ein Verteilen der wenigstens einen Tragplatte (131) von dem einspurigen Bereich (151) in den mehrspurigen Bereich (152) bewirken kann, wobei die Schaltweiche (261) ausgestaltet ist, das Verteilen durch Bewirken einer elektromagnetischen Kraft auf die Tragplatte (131) und/oder ein Schaltelement (270) der Schaltweiche (261) zu bewirken.

## Beschreibung

Die vorliegende Erfindung betrifft einen Tragplattenlinienverteiler zum Verteilen von Fördergut von einer Spur auf mehrere Spuren gemäß Anspruch 1 sowie ein Verfahren zum Verteilen von Fördergut von einer Spur auf mehrere Spuren mittels eines Tragplattenlinienverteilers gemäß Anspruch 15.

### Stand der Technik

Tragplattenlinienverteiler sind aus dem Stand der Technik bekannt. Diese umfassen ein Förderband oder einen Fördergurt, auf dem eine Anzahl von Tragplatten mitgeführt werden kann. Die Tragplatten wiederum sind zumindest quer zur Förderrichtung des Fördergurtes beweglich angeordnet, sodass sie quer zur Förderrichtung und relativ zum Fördergurt verschoben werden können. Hierbei kommen üblicherweise pneumatische Elemente zum Einsatz, die die Tragplatten quer zur Förderrichtung des Fördergurtes verschieben. Hierdurch kann ein Einteilen von mit den Tragplatten transportiertem Fördergut auf mehrere Gassen oder Spuren realisiert werden.

Die bisherigen Realisierungen sind jedoch hinsichtlich der erzielbaren Schaltfrequenz (die Anzahl der Einteilungen von Tragplatten auf Spuren pro Zeiteinheit) nur begrenzt einsetzbar und weisen eine gewisse Toleranz und damit reduzierte Zuverlässigkeit beim Einstellen der Position der Tragplatten quer zur Förderrichtung auf. Insbesondere ist ein zuverlässiges Einstellen der Position der Tragplatten bei gleichzeitig hohen Durchsätzen nur schwierig möglich.

### Aufgabe

Ausgehend vom bekannten Stand der Technik besteht die zu lösende technische Aufgabe somit darin, einen Tragplattenlinienverteiler sowie ein Verfahren zum Verteilen von Fördergut von einer Spur auf mehrere Spuren anzugeben, die ein zuverlässiges Verteilen von Fördergut auf mehrere Spuren bei gleichzeitig hohem Durchsatz an Fördergut realisieren.

### Lösung

Diese Aufgabe wird erfindungsgemäß durch den Tragplattenlinienverteiler zum Verteilen von Fördergut von einer Spur auf mehrere Spuren gemäß Anspruch 1 sowie das Verfahren zum Verteilen von Fördergut von einer Spur auf mehrere Spuren mittels eines Tragplattenlinienverteilers gemäß Anspruch 15 gelöst. Vorteilhafte Weiterbildungen der Erfindung sind in den Unteransprüchen erfasst.

Der erfindungsgemäße Tragplattenlinienverteiler zum Verteilen von Fördergut von einer Spur auf mehrere Spuren umfasst einen Fördergurt, wenigstens eine auf dem Fördergurt angeordnete und quer zu einer Förderrichtung des Fördergurts beweglich angeordnete Tragplatte mit wenigstens einem Führungselement, eine Führung zum Führen der wenigstens einen Tragplatte mittels des Führungselements, wobei die Führung einen einspurigen Bereich, einen in Förderrichtung stromab angeordneten mehrspurigen Bereich und eine Schaltweiche umfasst, die ein Verteilen der wenigstens einen Tragplatte von dem einspurigen Bereich in den mehrspurigen Bereich bewirken kann, wobei die Schaltweiche ausgestaltet ist, das Verteilen durch Bewirken einer elektromagnetischen Kraft auf die Tragplatte und/oder ein Schaltelement der Schaltweiche zu bewirken.

Die Schaltweiche kann so ausgestaltet sein, dass das Führungselement von dem einspurigen Bereich der Führung durch die Schaltweiche oder zumindest einen Teil der Schaltweiche hindurchläuft und anschließend in den mehrspurigen Bereich der Führung eindringen kann.

Dass das Verteilen durch Bewirken einer elektromagnetischen Kraft auf die Tragplatte und/oder ein Schaltelement der Schaltweiche bewirkt wird, ist hier so zu verstehen, dass entweder durch eine auf die Tragplatte wirkende elektromagnetische Kraft (die von der Schaltweiche oder dem Schaltelement bewirkt werden kann) die Tragplatte quer zur Förderrichtung verschoben wird, sodass sie in eine vorgesehene Spur des mehrspurigen Bereichs eindringt oder dass alternativ ein bewegliches Schaltelement der Schaltweiche durch eine elektromagnetische Kraft in Bewegung versetzt wird und somit die Bewegung der Tragplatte auf eine Spur des mehrspurigen Bereichs lenkt.

Das Bewirken elektromagnetischer Kräfte kann mit Bauteilen realisiert werden, die eine höhere Taktfrequenz bzw. Schaltfrequenz als pneumatische Elemente oder mechanische Elemente besitzen und gleichzeitig eine hohe Einstellgenauigkeit realisieren. Mit diesem Tragplattenlinienverteiler kann somit zuverlässig die Position einer Tragplatte selbst bei sehr hohen Durchsätzen an Fördergut eingestellt werden. Gleichzeitig kann das Verteilen steuerungstechnisch flexibel ausgestaltet werden.

Es kann vorgesehen sein, dass das Schaltelement eine Schwinge umfasst, die ausgestaltet ist, abhängig von ihrer Position ein Verteilen einer Tragplatte von dem einspurigen Bereich auf eine Spur des mehrspurigen Bereichs zu bewirken, und wobei das Schaltelement ein mit der Schwinge verbundenes, elektromotorisches Antriebselement umfasst, das ausgestaltet ist, die Position der Schwinge zu verändern. In diesem Sinne ist das elektromotorische Antriebselement die Komponente, die die elektromagnetische Kraft aufbringt, um damit eine mechanische Bewegung der Schwinge zu bewirken. Durch Verwenden einer Schwinge kann das Verändern der Bewegungsrichtung der Tragplatte (also welcher Spur die jeweilige Tragplatte zugeordnet wird) durch Bewegungen relativ kompakter bzw. kleiner Komponenten realisiert werden, was die aufzubringenden Kräfte und Schaltzeiten verringert.

Es kann vorgesehen sein, dass die Schwinge mit dem elektromotorischen Antriebselement über eine Drehachse verbunden ist und wobei zum Einstellen der Position der Schwinge die Schwinge um die Drehachse durch das elektromotorische Antriebselement in Drehung versetzt werden kann, wobei optional das elektromotorische Antriebselement oder ein mit der Drehachse verbundenes Verbindungselement des elektromotorischen Antriebselements eine rotatorische Bewegung oder eine translatorische Bewegung ausführen kann, die über die Drehachse in eine Drehung der Schwinge übersetzt werden kann. In dieser Ausführungsform wird die notwendige Bewegungsamplitude der Schwinge weiter reduziert, was die Schaltzeiten vorteilhaft beeinflussen kann.

Es kann vorgesehen sein, dass die Schwinge einen Führungsarm umfasst, der mit dem Führungselement in Wechselwirkung treten kann, um die Tragplatte vom einspurigen Bereich auf eine Spur des mehrspurigen Bereichs zu verteilen, und wobei die Schwinge ein Gegengewicht umfasst, das auf einer dem Führungsarm gegenüberliegenden Seite der Drehachse angeordnet ist, wobei optional der Massenschwerpunkt der Schwinge in einem Abstand zur Drehachse angeordnet ist, der weniger als 20% oderweniger 10% einer maximalen Ausdehnung der Schwinge in einer Richtung senkrecht zur Drehachse beträgt. Unwuchten und insbesondere Drehmomente, die auf die Schwinge beim Drehen um die Drehachse wirken können, werden durch die Kombination des Führungsarms mit dem Gegengewicht reduziert, sodass die Zuverlässigkeit beim Betrieb des Tragplattenlinienverteilers erhöht wird.

Das elektromotorische Antriebselement kann einen Stellantrieb oder einen Servomotor umfassen. Diese Ausführungsform kann kostengünstig und gleichzeitig mit hoher Zuverlässigkeit hinsichtlich Schaltfrequenz und Positioniergenauigkeit der Schwinge realisiert werden.

Das Schaltelement kann wenigstens zwei Elektromagnete umfassen, wobei jeweils ein Elektromagnet genau einer Spur des mehrspurigen Bereichs zugeordnet ist und wobei die wenigstens zwei Elektromagnete angesteuert werden können, um eine elektromagnetische Kraft auf ein magnetisches Material der Tragplatte zu bewirken, um die Tragplatte von dem einspurigen Bereich auf eine Spur des mehrspurigen Bereichs zu verteilen. Diese Ausführungsform umfasst insbesondere, dass durch Ansteuern eines der wenigstens zwei Elektromagnete eine Bewegung der Tragplatte in Richtung der zugehörigen Spur bewirkt wird. Der Steuerungsaufwand kann hiermit geringgehalten und die Anzahl beweglicher Komponenten verringert und damit die Zuverlässigkeit des Tragplattenlinienverteilers im Betrieb erhöht werden.

Das Führungselement kann das magnetische Material umfassen. Die Tragplatte kann hiermit kompakt ausgeführt werden.

Die wenigstens zwei Elektromagnete können an der Führung angeordnet sein. Mit dieser Ausführungsform wird die Konstruktion des Tragplattenlinienverteilers kompakter.

Es kann vorgesehen sein, dass das Schaltelement wenigstens zwei magnetische Elemente umfasst, wobei jeweils ein magnetisches Element genau einer Spur des mehrspurigen Bereichs zugeordnet ist, und wobei die Tragplatte einen Elektromagneten umfasst, der angesteuert werden kann, um durch Wechselwirkung mit wenigstens einem der wenigstens zwei magnetischen Elemente die Tragplatte von dem einspurigen Bereich auf eine Spur des mehrspurigen Bereichs zu verteilen.

In dieser Ausführungsform kann die Schaltweiche bevorzugt eine Form aufweisen, in der die verschiedenen Spuren in Transportrichtung der Tragplatte nacheinander von dem einspurigen Bereich abzweigen. Durch Steuerung des Zeitpunktes, zu dem der Elektromagnet aktiviert wird, kann somit das Überführen der Tragplatte von dem einspurigen Bereich in eine der Spuren des mehrspurigen Bereichs zuverlässig realisiert werden.

Der Tragplattenlinienverteiler kann eine Erkennungseinrichtung zum Erkennen einer Position und/oder eines Identifikationselements der Tragplatte stromauf der Schaltweiche umfassen und der Tragplattenlinienverteiler kann weiterhin eine Steuereinheit umfassen, die ausgebildet ist, das Verteilen der Tragplatte basierend auf der erkannten Position und/oder dem erkannten Identifikationselement zu steuern. Mit dieser Ausführungsform kann ein individualisierter Transport von Tragplatten und somit Produkten realisiert werden.

Der mehrspurige Bereich kann wenigstens drei oder wenigstens vier Spuren umfassen. Hierdurch können auch komplexe Weiterverarbeitungen von Produkten bewerkstelligt werden.

Es kann vorgesehen sein, dass eine Ausdehnung des Fördergurtes in Förderrichtung größer ist als die Ausdehnung der Führung in Förderrichtung. Die Führung kann mit dieser Ausführungsform vollständig innerhalb eines von dem Fördergurt umschlossenen Bereichs angeordnet werden, was das Risiko von Verschmutzungen oder anderweitigen Beeinträchtigungen durch Umwelteinflüsse reduziert.

In einer Ausführungsform ist vorgesehen, dass der Tragplattenlinienverteiler weiterhin einen Rückführbereich umfasst, in dem die Tragplatte nach Passieren des mehrspurigen Bereichs wieder zum einspurigen Bereich zurückgeführt werden kann, wobei der Rückführbereich optional eine zweite Führung umfasst, die eine Position der Tragplatte quer zur Förderrichtung auf eine dem einspurigen Bereich entsprechende Position zurückführt.

In diesem Rückführbereich ist kein Schaltelement mehr erforderlich, sodass der Rückführbereich als keine Schaltweiche bzw. kein Schaltelement umfassend ausgestaltet sein kann. Hiermit wird auf konstruktiv einfache Weise eine Rückführung der Tragplatte in den einspurigen Bereich bewirkt, sodass nach Übernahme eines Produktes erneut ein Verteilen auf den mehrspurigen Bereich einfach realisiert werden kann.

Es kann vorgesehen sein, dass der Tragplattenlinienverteiler eine Vielzahl von Tragplatten umfassen und wobei die Schaltweiche ausgestaltet ist, das Verteilen durch Bewirken einer elektromagnetischen Kraft auf eine aktuelle Tragplatte und/oder das Schaltelement zu bewirken, nachdem eine vorauseilende Tragplatte das Schaltelement passiert hat. Die Zuverlässigkeit beim Verteilen der Tragplatten wird hiermit erhöht. Gleichzeitig kann die Schaltfrequenz durch Anwendung elektromagnetischer Kräfte hoch sein.

Erfindungsgemäß ist ein Verfahren zum Verteilen von Fördergut von einer Spur auf mehrere Spuren mittels eines Tragplattenlinienverteilers gemäß der vorangegangenen Ausführungsformen vorgesehen, wobei das Verfahren ein Befördern der Tragplatte von dem einspurigen Bereich über die Schaltweiche in eine Spur des mehrspurigen Bereichs umfasst und wobei das Verfahren ein Verteilen der Tragplatte auf eine Spur des mehrspurigen Bereichs durch Bewirken einer elektromagnetischen Kraft auf die Tragplatte und/oder ein Schaltelement der Schaltweiche umfasst. Mit diesem Verfahren ist ein individualisierter und schneller sowie zuverlässiger Transport von Tragplatten auch bei mehrspuriger Verteilung der Tragplatten möglich.

Sämtliche der beschriebenen Ausführungsformen sind miteinander kombinierbar.

### Kurze Beschreibung der Figuren

- Fig. 1: zeigt eine Ausführungsform eines Tragplattenverteilers.
- Figuren 2 und 3: zeigen Ausführungsformen einer Führung.
- Figuren 4 bis 7: zeigen Ausführungsformen einer Schaltweiche mit einem Schaltelement.
- Figuren 8 und 9: zeigen weitere Ausführungsformen einer Schaltweiche mit einem Schalt-element.
- Figur 10: zeigt eine Ausführungsform eines Tragplattenlinienverteilers mit einem Rückführbereich.

### Ausführliche Beschreibung

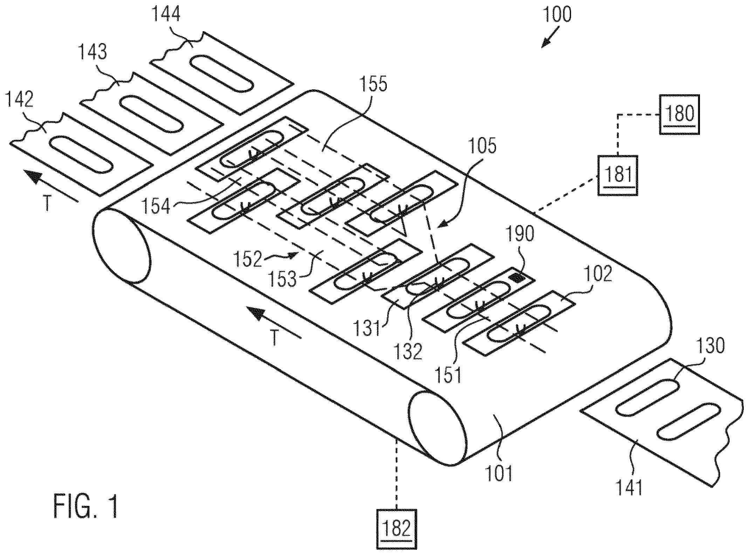

Figur 1 zeigt eine Ausführungsform eines Tragplattenlinienverteilers 100. Der Tragplattenlinienverteiler 100 umfasst einen Fördergurt, der als kontinuierlich umlaufender Fördergurt ausgestaltet sein kann und auf dessen Oberseite Tragplatten 131 Fördergut 130 (bspw. Verpackungen mit oder ohne bereits eingefülltem Produkt oder ein Produkt, wie bspw. Lebensmittel selbst) aus einer Zuführeinrichtung 141 übernehmen können. Die Zuführeinrichtung kann bspw. ein Förderband sein. Der Tragplattenlinienverteiler 100 umfasst ferner eine Führung 105, entlang der die Tragplatten 130 mittels eines Führungselements 132 (bspw. ein Stift oder Dorn an einer der Produkttragseite der Tragplatten 131 gegenüberliegenden Seite) geführt werden können. Zu diesem Zweck kann der Fördergurt 101 des Tragplattenlinienverteilers 100 eine Reihe von zueinander beabstandeten Elementen aufweisen, wobei die Tragplatten auf diesen zueinander beabstandeten Elementen so angeordnet sein können, dass das Führungselement 132 in den Abstand zwischen den Elementen hindurch in die Führung 105 hineinragen kann.

Der Tragplattenlinienverteiler 100 kann mittels eines Antriebselements 182, wie bspw. eines Servoantriebs, in Transportrichtung T bewegt werden, sodass die Tragplatten mit dem Fördergurt mitbewegt werden. Die Führungselemente 132 können in der Führung so angeordnet sein, dass eine vertikale Bewegung einer Tragplatte senkrecht zu einer Transportebene, die die Transportrichtung T einschließt, nicht möglich ist. Dies kann bspw. durch eine umgreifende Ausgestaltung der Führung 105 realisiert werden, die in die Führung eingebrachte Führungselemente so umgreift, dass diese nicht in einer vertikalen Richtung bewegt werden können.

Die Führung 105 kann eine Länge in Transportrichtung T aufweisen, die kürzer als die Länge des Fördergurtes 101 in Transportrichtung T ist. Hier ist die Länge des Fördergurtes 101 in Transportrichtung T die Länge, über die sich der Fördergurt beispielsweise zwischen der Zuführeinrichtung 141 und den hier weiterhin dargestellten Abführeinrichtungen 142 bis 144 in Transportrichtung T erstreckt.

Der Tragplattenlinienverteiler 100 ist ausgestaltet, Tragplatten von einem einspurigen Bereich 151 der Führung 105 in einen mehrspurigen Bereich 152 der Führung 105 zu überführen, sodass die Tragplatten quer zur Transportrichtung T im mehrspurigen Bereich 152 auf unterschiedliche Spuren 153, 154 und 155 verteilt werden. Von den verschiedenen Spuren 153 bis 155 kann dann das Fördergut 130 von den Tragplatten auf die nachgeordneten Transporteinrichtungen 142 bis 144 übergeben werden.

Um zu bestimmen, welche Tragplatte auf welche der Spuren 153 bis 155 verteilt werden muss, kann vorgesehen sein, dass jede Tragplatte ein Identifikationselement 190 (bspw. eine optische oder magnetische Markierung, wie etwa ein RFID-Tag) umfasst, die die jeweilige Tragplatte eindeutig identifiziert. Eine geeignete Erkennungseinrichtung bzw. Sensor 181 (bspw. ein optischer Sensor oder ein Sensor zum Auslesen von in einer magnetischen Codierung, wie einem RFID-Tag codierten Informationen) kann diese Information auslesen und ein entsprechendes Signal an eine Steuereinheit 180 übergeben.

Die Steuereinheit 180 (beispielsweise ein Computer mit Prozessor und zugeordnetem Speicher) kann vorgesehen und ausgestaltet sein, die Verteilung der Tragplatten abhängig von der Identifikation auf die einzelnen Spuren 153 bis 155 zu bewirken. Dies ist jedoch so nicht zwingend. Es können auch keine Identifikationselemente 190 (und entsprechend keine Erkennungseinrichtung 181) vorgesehen sein und die Aufteilung der jeweiligen Tragplatten 131 auf die Spuren 153 bis 155 kann durch die Steuereinheit bspw. anhand eines in der Steuereinheit (bspw. einem zugeordneten Speicher) hinterlegten Schema vorgenommen werden.

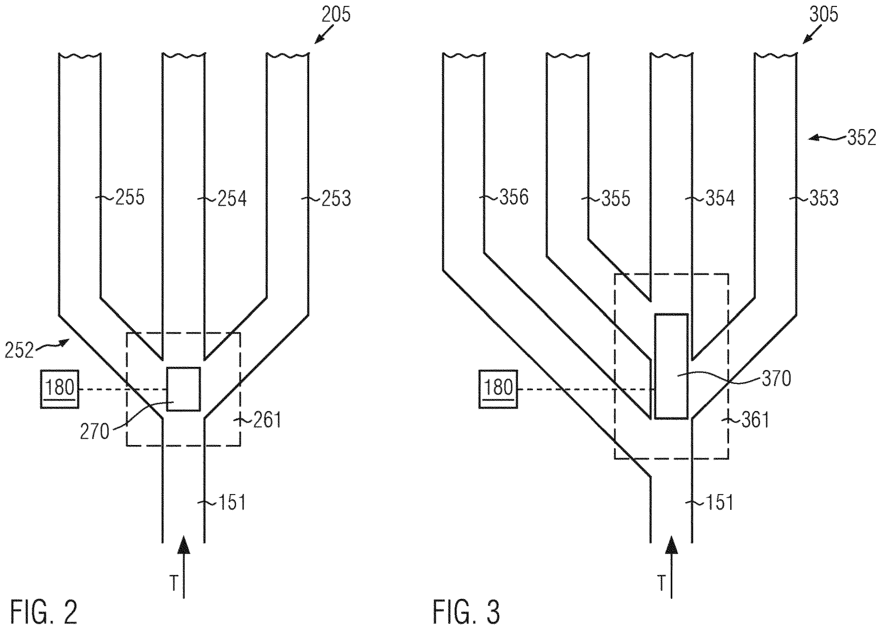

Die Figuren 2 und 3 zeigen Ausführungsformen einer Führung 105, wie sie in Figur 1 allgemein beschrieben wurde.

In Figur 2 umfasst die Führung 205 den einspurigen Bereich 151, der in Transportrichtung T stromauf des mehrspurigen Bereichs 252 mit den einzelnen Spuren 253 bis 255 angeordnet ist. Während hier drei Spuren 253 bis 255 im mehrspurigen Bereich 252 gezeigt sind, können auch mehr oder weniger Spuren im mehrspurigen Bereich (bspw. nur zwei oder vier oder mehr Spuren) vorgesehen sein, auf die die in Figur 2 nicht dargestellten Tragplatten mit dem darauf angeordneten Fördergut verteilt werden können.

Erfindungsgemäß umfasst die Führung 205 eine Schaltweiche 261, die hier schematisch dargestellt als der Bereich gezeigt ist, in dem ein Verteilen der Tragplatten von dem einspurigen Bereich auf die einzelnen Spuren 253 bis 255 realisiert wird. In der in Figur 2 dargestellten Ausführungsform der Führung 205 befinden sich die Abzweigungen zu den verschiedenen Spuren 253 bis 255 im Wesentlichen in Transportrichtung T an derselben Position. In dieser Ausführungsform umfasst die Schaltweiche weiterhin ein Schaltelement 270, das in diesem Bereich bspw. gesteuert durch die Steuereinheit 180 ein Verteilen der Tragplatten auf die einzelnen Spuren 253 bis 255 bewirken kann.

Erfindungsgemäß ist vorgesehen, dass die Schaltweiche das Verteilen der Tragplatten auf die Spuren des mehrspurigen Bereichs durch Bewirken einer elektromagnetischen Kraft entweder auf die Tragplatten selbst und/oder auf das Schaltelement 270 der Schaltweiche bewirken kann.

Die Figur 3 zeigt eine weitere Ausführungsform einer Führung 305. In dieser Ausführungsform sind die Abzweigungen der Spuren 353 bis 356 von dem einspurigen Bereich 151 in Transportrichtung beabstandet zueinander angeordnet. Die Schaltweiche 361 erstreckt sich entsprechend über einen größeren Bereich in Transportrichtung T verglichen mit der Ausführungsform der Figur 2 und gewährleistet eine sukzessive (also aufeinanderfolgende) Verteilung von Tragplatten je nachdem, welcher der Spuren 353 bis 356 diese zuzuführen sind. Ein vorgesehenes Schaltelement 370 ist hier nur schematisch als entlang der Schaltweiche angeordnetes Element gezeigt. Insbesondere in einer der Figur 3 entsprechenden Ausführungsform der Führung kann auch vorgesehen sein, dass das Schaltelement 370 mehrere Elemente umfasst, die jeweils unabhängig voneinander von der Steuereinheit angesteuert werden können, um ein Verteilen der Tragplatten zu bewirken.

In den in den Figuren 2 und 3 dargestellten Ausführungsformen umfasst die Führung lediglich eine Abzweigung von dem einspurigen Bereich. Es kann jedoch auch vorgesehen sein, dass in Transportrichtung T eine oder mehrere der Spuren 253 bis 255 bzw. 353 bis 356 nochmals verzweigen. Die hier beschriebenen Ausführungsformen sind auf entsprechende weitere Verzweigungen ebenfalls anwendbar.

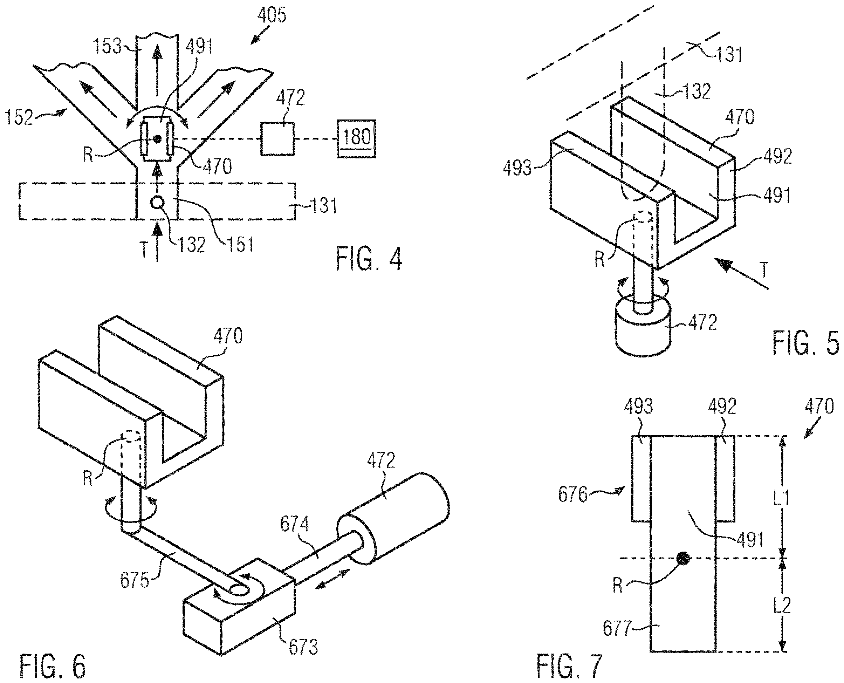

Die Figuren 4 bis 7 zeigen eine Ausführungsform einer Schaltweiche mit einem Schaltelement, dass eine Schwinge 470 umfasst. Bevorzugt kann diese Ausführungsform mit einer Führung entsprechend Figur 2 kombiniert werden, ist darauf jedoch nicht beschränkt. Die Schwinge 470 ist bevorzugt um eine Drehachse R drehbar gelagert und erlaubt das Führen eines Führungselements 132 einer Tragplatte 130. Die Schwinge 470 ist derart drehbar gelagert, dass sie jeder der Spuren des mehrspurigen Bereichs zugewandt werden kann.

Die Schwinge kann einen Führungsbereich 491 umfassen, in den das Führungselement 132 einer Tragplatte 131 eingebracht werden kann. Durch entsprechende Positionierung der Schwinge 470 wird dann die Bewegungsrichtung der Tragplatte 131 aus dem einspurigen Bereich 151 in eine Spur des mehrspurigen Bereichs 152 geändert. In der in Figur 4 dargestellten Ausführungsform ist die Schwinge 470 bspw. so angeordnet, dass die Tragplatte 131 aus dem einspurigen Bereich der Spur 153, die hier lediglich beispielhaft die Bewegungsrichtung der Tragplatte 131 im Wesentlichen beibehält, überführt wird. Wird die Schwinge 470 in der Bildebene um die Drehachse R gedreht, kann ein Überführen der Tragplatte 131 in eine der anderen Spuren erfolgen.

Es kann vorgesehen sein, dass die Schwinge 470 bereits vor dem Eintritt einer Tragplatte 131 und insbesondere des Führungselements 132 in den Führungsbereich 491 so positioniert wird, dass ein Austritt des Führungsbereichs 491, aus dem die Tragplatte 131 bzw. das Führungselement 132 in Transportrichtung T die Schwinge verlässt, in Richtung der Spur, der die Tragplatte 131 zugeführt werden soll, ausgerichtet ist. Alternativ kann auch vorgesehen sein, dass ein Verändern der Ausrichtung der Schwinge 470 erst erfolgt, wenn eine Tragplatte 131 und insbesondere das Führungselement 132 in den Führungsbereich 491 der Schwinge eingetreten ist. Ein unerwünschtes Verkanten oder Blockieren des einspurigen Bereichs 151 durch die Dimensionierung der Schwinge kann hiermit vermieden werden.

Zum Betätigen der Schwinge 470 kann ein elektromotorisches Antriebselement, insbesondere ein Servomotor oder ein Stellantrieb, 472 vorgesehen sein. Die Steuereinheit 180 kann das elektromotorische Antriebselement 472 ansteuern, um ein Drehen der Schwinge 470 um die Drehachse R zu bewirken und so die Positionierung der Schwinge 470 und damit das Aufteilen der Tragplatte auf eine der Spuren des mehrspurigen Bereichs 152 zu steuern. Wie bereits erwähnt, kann dieses Aufteilen und damit das Ansteuern des elektromotorischen Antriebselements 472 entweder basierend auf einem spezifischen, bspw. voreingestellten Schema erfolgen oder anhand von Identifikationselementen, die den jeweiligen Tragplatten zugeordnet sein können, individualisiert erfolgen.

Die Figur 5 zeigt eine Ausführungsform der Schwinge 470 mit dem dazugehörigen elektromotorischen Antriebselement 472. In der hier gezeigten Ausführungsform umfasst die Schwinge den Führungsbereich 491, der hier beispielhaft durch Führungsbacken 492 und 493 gesehen in Transportrichtung links und rechts begrenzt wird. Die Führungsbacken 492 und 493 können sich zumindest teilweise vertikal nach oben erstrecken und ein Führungselement 132 einer Tragplatte 131 zumindest teilweise aufnehmen, sodass sie eine Führung der Bewegung des Führungselements 132 und damit der Tragplatte bewirken können.

Die Schwinge 470 ist in der hier gezeigten Ausführungsform um die Drehachse R drehbar gelagert, wobei das elektromotorische Antriebselement 472 unterhalb der Schwinge 470 angeordnet und mit der Drehachse R drehbar verbunden sein kann. Eine solche Ausführungsform ist insbesondere vorteilhaft bei Verwendung eines Stellantriebs oder Servomotors, da die von diesen Antrieben bewirkte Drehbewegung unmittelbar auf die Drehachse zum Verstellen der Position der Schwinge 470 übertragen werden kann. Damit kann die Schwinge 470 in Drehung versetzt werden. Anstelle der Verbindung der Drehachse R mit dem elektromotorischen Antriebselement 472 kann diese Verbindung auch indirekt, bspw. über ein Getriebe, erfolgen, um eine Übersetzung der Drehbewegung zumindest eines Teils des elektromotorischen Antriebselements 472 entsprechend eines erforderlichen Übersetzungsverhältnisses auf die Drehachse R und damit auf die Schwinge 470 zu übertragen.

Die Figur 6 zeigt eine zur Figur 5 alternative Ausführungsform. In dieser Ausführungsform kann das elektromotorische Antriebselement 472 entweder als Servomotor oder Stellantrieb ausgebildet sein oder als allgemeiner Elektromotor ausgestaltet sein. Bevorzugt kann das elektromotorische Antriebselement eine translatorische Bewegung entlang der dargestellten Doppelpfeilrichtung bewirken, die in der hier gezeigten Ausführungsform auf ein Verbindungselement 473 über eine Verbindung 474 mit dem elektromotorischen Antriebselement 472 übertragen wird. Das Verbindungselement 473 folgt der translatorischen Bewegung und ist über eine geeignete Verbindung 675 mit der Drehachse R verbunden. Mit dieser Ausführungsform kann die translatorische Bewegung eines Teils des elektromotorischen Antriebselements 472 und/oder des Verbindungselements 673 in eine Rotationsbewegung der Drehachse R und damit der Schwinge 470 übertragen werden. Diese Ausführungsform kann vorteilhaft genutzt werden, um Toleranzen bei der Bewegung des Verbindungselements 473 (insbesondere was seine spezifische Position zum Erreichen einer gewünschten Verstellung der Schwinge 470 zum Verteilen einer Tragplatte 131 betrifft) durch Wahl der Länge der Verbindung 675 zu steuern. Da die translatorische Bewegung des Verbindungselements bzw. des elektromotorischen Antriebselements 472 letztlich in einem Drehwinkel resultiert, um den die Drehachse R gedreht wird, kann durch Verlängerung der Verbindung 675 die Empfindlichkeit oder Sensitivität der Schwinge 470 beim Einstellen der Drehposition gegenüber geringfügigen Veränderungen in der Position des Verbindungselements 673 reduziert werden. Dies kann vorteilhaft genutzt werden, um die Anforderungen hinsichtlich der Genauigkeit der Positionseinstellung des elektromotorischen Antriebselements und/oder des Verbindungselements 673 zu reduzieren.

Figur 7 zeigt eine Draufsicht auf eine Schwinge 470 gemäß einer Ausführungsform, die mit sämtlichen bisher beschriebenen Ausführungsformen der Schwinge 470 kombiniert werden kann.

In der hier gezeigten Ausführungsform umfasst die Schwinge 470 einen Führungsarm 676, der analog zu den bisher beschriebenen Ausführungsformen den Führungsbereich 491 umfasst, der optional von den Führungsbacken 492 und 493 in Transportrichtung einer Tragplatte (hier nicht dargestellt) begrenzt sein kann. Weiterhin umfasst die Schwinge 470 ein Gegengewicht 677, das auf der der Drehachse R gegenüberliegenden Seite des Führungsarm 676 angeordnet ist. Der Führungsarm kann ausgehend von der Drehachse R eine Länge L1 besitzen und das Gegengewicht kann eine Länge L2 besitzen. Die Längen L1 und L2 können voneinander verschieden sein, was insbesondere mit Hinblick auf die notwendige drehbare Anordnung der Schwinge in der Schaltweiche vorteilhaft ist, da das Gegengewicht 677 üblicherweise in Richtung des einspurigen Bereichs der Führung (siehe Figuren 2 und 3) ragt. Eine mögliche Drehung der Schwinge wird daher durch die Ausdehnung des Gegengewichts in Richtung des einspurigen Bereichs ggf. begrenzt. Wird die Länge L2 ausgehend von der Drehachse R möglichst kurz gewählt, ist eine Drehung der Schwinge um einen größeren Winkel möglich.

Das Gegengewicht 677 kann dazu dienen, auf die Schwinge wirkende Drehmomente aufgrund der Drehung des Führungsarms 676 um die Drehachse R zu kompensieren bzw. zu reduzieren, sodass die auf die Drehachse R wirkenden Kräfte minimiert werden. Dazu kann vorgesehen sein, dass das Trägheitsmoment des Gegengewichts 677 dem Trägheitsmoment des Führungsarms 676 bezüglich der Rotationsachse R im Wesentlichen entspricht, bevorzugt von diesem nicht mehr als 10% oder 20% abweicht.

Dadurch wird eine Drehung der Schwinge 470 um die Drehachse R ein möglichst kleines resultierendes Drehmoment auf die Drehachse R bewirken, was die Belastung der Schwinge und der Drehachse R reduzieren kann. Wird die Länge L2 kleiner gewählt als die Länge L1 muss die Masse des Gegengewichts entsprechend größer gewählt werden als die Masse des Führungsarms. Bevorzugt befindet sich dabei der Massenschwerpunkt der Schwinge in einem Abstand zur Drehachse, der kleiner als 20% der maximalen Ausdehnung der Schwinge in einer Ebene senkrecht zur Drehachse ist. Da der Führungsarm 676 bevorzugt eine Länge L1 aufweist, die größer ist als die Länge L2 des Gegengewichts, kann in einigen Ausführungsformen vorgesehen sein, dass der Abstand des Schwerpunktes zur Drehachse R kleiner als 20% oder bevorzugt kleiner als 10% der Länge L1 ist.

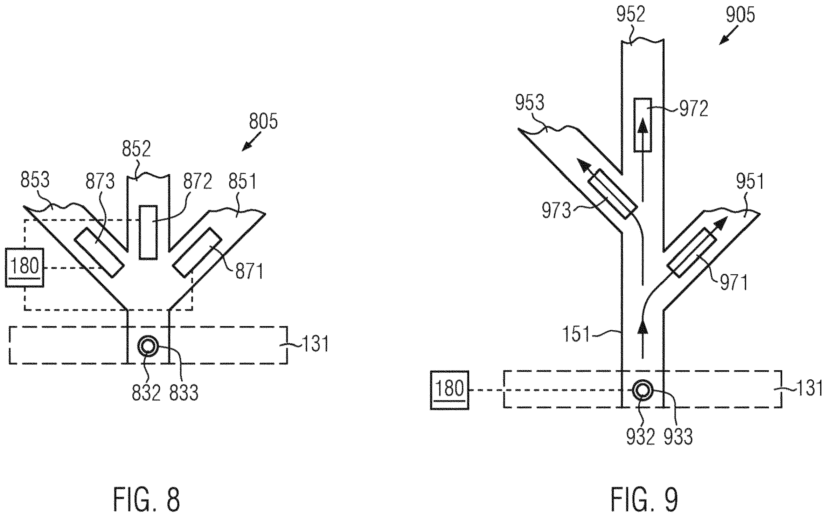

Die Figuren 8 und 9 zeigen weitere Ausführungsformen der Führung.

In der in Figur 8 gezeigten Ausführungsform der Führung 805 umfasst das Schaltelement (siehe Figuren 2 und 3) eine Anzahl von Elektromagneten 871, 872 und 873. Die Elektromagnete sind jeweils einer der Spuren 851 bis 853 zugeordnet und können durch die Steuereinheit 180 angesteuert bzw. mit Strom beaufschlagt werden, sodass die jeweiligen Elektromagnete ein elektromagnetisches Feld erzeugen. Die Elektromagnete 871 bis 873 können dabei unabhängig voneinander von der Steuereinheit 180 angesteuert werden und sind so angeordnet (erstrecken sich ggf. auch in den einspurigen Bereich), dass sie eine elektromagnetische Kraft die Tragplatte so bewirken können, dass ein Umlenken einer Tragplatte 131 auf eine der dem jeweiligen Elektromagneten 871 bis 873 zugeordneten Spur 851 bis 853 bewirkt wird.

Um dies zu erreichen, ist bevorzugt vorgesehen, dass die Tragplatte und/oder das Führungselement 832 der Tragplatte 131 ein magnetisches Element oder magnetisierbares Element bzw. Material 833 umfasst. Es kann vorgesehen sein, dass das Führungselement 832 das magnetische Material 833 enthält oder eine Beschichtung aus magnetischem Material umfasst, sodass die durch den jeweiligen Elektromagneten 871 bis 873 bewirkte elektromagnetische Kräfte auf das magnetische Material 833 einwirken und eine Kraft in Richtung einer der Spuren 851 bis 853 hervorrufen kann.

In der hier gezeigten Ausführungsform sind die Elektromagnete 871 bis 873 in einer unteren Begrenzungsfläche (gesehen von der Transportebene der Tragplatten aus) angeordnet. Sie können sich in die Führung 805 hineinerstrecken. Dies ist jedoch nicht zwingend. Alternativ oder zusätzlich können ein oder mehrere Elektromagnete 871 bis 873 auch in einer oder mehreren Seitenwänden der jeweiligen Spuren 851 bis 853 oder auf diesen Seitenwänden angeordnet sein.

Bevorzugt sind Ausführungsformen, bei denen die Elektromagnete so in der Führung angeordnet sind, dass sie bündig mit einer Begrenzungsfläche der Führung abschließen, sodass eine Kollision des Führungselements 832 mit den Elektromagneten 871 bis 873 möglichst vermieden wird. Unerwünschte Verkantungen oder Beschädigungen können hiermit vermieden werden.

In der Figur 9 ist eine weitere Ausführungsform der Führung 905 dargestellt. In dieser Ausführungsform sind den jeweiligen Spuren 951 bis 953 magnetische Elemente, insbesondere Permanentmagnete oder Magnete, 971 bis 973 zugeordnet. Diese können analog zu den Elektromagneten 871 bis 873 der Figur 8 angeordnet sein. Diese Ausführungsformen sollen hier nicht wiederholt werden.

In dieser Ausführungsform ist bevorzugt aber nicht zwingend vorgesehen, dass die jeweiligen Spuren 951 bis 953 beabstandet zueinander von dem einspurigen Bereich 151 der Führung 905 abzweigen (siehe Figur 3). Ferner ist in dieser Ausführungsform vorgesehen, dass die Tragplatte 131 einen bspw. durch die Steuereinheit 180 ansteuerbaren Elektromagneten 933 umfasst. Dieser kann erneut in das Führungselement 932 integriert bzw. von diesem umfasst sein oder das Führungselement 932 ganz oder teilweise umgeben.

Um eine Stromzufuhr zu dem Elektromagneten zu realisieren, können ein oder mehrere Schleifkontakte an der Tragplatte 131 vorgesehen sein, die mit einer entsprechenden stromführenden Schleifleitung, die bspw. im Bereich des Tragplattenlinienverteilers angeordnet sein kann, in Kontakt stehen, um Strom zu übertragen. Die Schleifleitung kann vorteilhaft auch als Teil der Führung 905 realisiert sein und sich beispielsweise nur im Bereich oder in der Schaltweiche erstrecken. Die Verbindung mit der Steuereinheit 180 kann entweder ebenfalls über diesen Schleifkontakt oder über eine drahtlose Verbindung realisiert werden.

In dieser Ausführungsform können die Tragplatte oder die Tragplatten des Tragplattenlinienverteilers Steuerelemente umfassen, die durch die Steuereinheit 180 angesteuert werden können, um den Elektromagneten 933 je nach Anforderung mit Strom zu beaufschlagen oder nicht. Das Ansteuern des Elektromagneten erfolgt dabei bevorzugt so, dass abhängig davon, welcher Spur 951 bis 953 die Tragplatte 131 zugeführt werden soll, der Elektromagnet zu einem bestimmten Zeitpunkt, zu dem der Magnet, der der Spur zugeordnet ist, von der Tragplatte passiert wird, oder in einer bestimmten Position entlang des einspurigen Bereichs 151 aktiviert wird, sodass die zwischen den entsprechenden Magneten 971 bis 973 und dem Elektromagneten 933 wirkende Kraft eine zuverlässige Verteilung der Tragplatte 131 auf die gewünschte Spur 951 bis 953 ermöglicht.

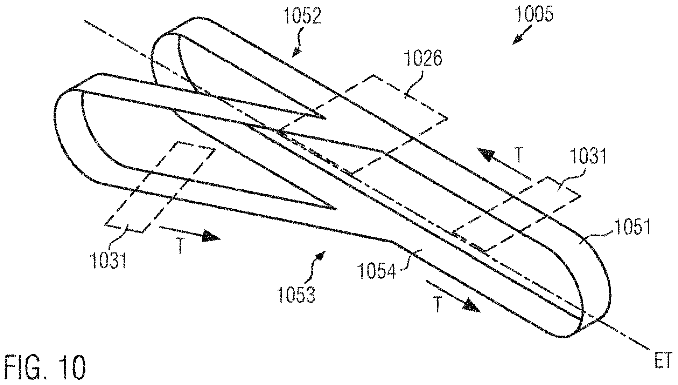

Figur 10 zeigt eine weitere Ausführungsform der Führung 1005. In dieser Ausführungsform umfasst die Führung 1005 einen einspurigen Bereich 1051 und einen mehrspurigen Bereich 1052, die über eine Schaltweiche mit einem Schaltelement entsprechend einer der bisher beschriebenen Ausführungsformen verbunden sein können, sodass ein Verteilen einer Tragplatte 1031 von dem einspurigen Bereich 1051 auf eine Spur des mehrspurigen Bereichs 1052 entsprechend einer der bisher beschriebenen Ausführungsformen realisiert werden kann. Da die Tragplatten bevorzugt mit dem Fördergurt (siehe Figur 1) umlaufen, ist des bevorzugt, wenn die auf die mehreren Spuren des mehrspurigen Bereichs 1052 verteilten Tragplatten möglichst ohne Lösen der Tragplatten von dem Fördergurt wieder dem einspurigen Bereich 1051 zugeführt werden können. Zu diesem Zweck kann vorgesehen sein, dass die Führung 1005 einen Rückführbereich 1053 umfasst, auf dem die Tragplatten 1031 entgegen der Transportrichtung T mit dem Fördergurt mitbewegt und in dem Rückführbereich 1053 wieder auf eine Spur 1054 zurückgeführt werden können. Die Führung 1005 stellt in dieser Ausführungsform somit eine geschlossene Kurve dar.

Optional kann in dem Rückführbereich 1053 eine weitere Schaltweiche vorgesehen sein, die die Tragplatten von den mehreren Spuren des mehrspurigen Bereichs wieder auf die eine Spur 1054 zurückführt, die in den einspurigen Bereich 1051 zurückführt. Dies ist jedoch nicht zwingend erforderlich, sofern der Rückführbereich so ausgestaltet ist, dass die mehreren Spuren entgegen der Transportrichtung T wieder auf eine einzelne Spur führen.

Bisher wurde lediglich die Wechselwirkung der Schaltweiche mit einer Tragplatte beschrieben. Es versteht sich, dass der Tragplattenlinienverteiler bevorzugt eine Vielzahl von Tragplatten umfasst. Um sicherzustellen, dass die Tragplatten zuverlässig auf die jeweiligen Spuren verteilt werden, kann vorgesehen sein, dass die Schaltweiche zum Verteilen einer Tragplatte auf eine der Spuren des mehrspurigen Bereichs erst betätigt werden kann, nachdem eine vorauseilende Tragplatte einen Abstandssensor passiert hat, der signalisieren kann, dass die jeweilige Tragplatte die Schaltweiche verlassen hat. Ein entsprechender Sensor kann in jeder der Spuren des mehrspurigen Bereichs vorgesehen sein, sodass zuverlässig festgestellt werden kann, dass die betreffende Tragplatte die Schaltweiche verlassen hat und der gewünschten Spur zugeführt wurde.

## Patentansprüche

1. Tragplattenlinienverteiler (100) zum Verteilen von Fördergut (130) von einer Spur (151) auf mehrere Spuren (153, 154, 155), der Tragplattenlinienverteiler (100) umfassend einen Fördergurt (101), wenigstens eine auf dem Fördergurt (101) angeordnete und quer zu einer Förderrichtung (T) des Fördergurts beweglich angeordnete Tragplatte (131) mit wenigstens einem Führungselement (132), eine Führung (105) zum Führen der wenigstens einen Tragplatte (131) mittels des Führungselements (132), wobei die Führung einen einspurigen Bereich (151), einen in Förderrichtung (T) stromab angeordneten mehrspurigen Bereich (152) und eine Schaltweiche (261) umfasst, die ein Verteilen der wenigstens einen Tragplatte (131) von dem einspurigen Bereich (151) in den mehrspurigen Bereich (152) bewirken kann, wobei die Schaltweiche (261) ausgestaltet ist, das Verteilen durch Bewirken einer elektromagnetischen Kraft auf die Tragplatte (131) und/oder ein Schaltelement (270) der Schaltweiche (261) zu bewirken.

2. Tragplattenlinienverteiler (100) nach Anspruch 1, wobei das Schaltelement (261) eine Schwinge (470) umfasst, die ausgestaltet ist, abhängig von ihrer Position ein Verteilen einer Tragplatte (131) von dem einspurigen Bereich (151) auf eine Spur des mehrspurigen Bereichs (152) zu bewirken, und wobei das Schaltelement ein mit der Schwinge (470) verbundenes, elektromotorisches Antriebselement (472) umfasst, das ausgestaltet ist, die Position der Schwinge (470) zu verändern.

3. Tragplattenlinienverteiler (100) nach Anspruch 2, wobei die Schwinge (470) mit dem elektromotorischen Antriebselement (472) über eine Drehachse (R) verbunden ist und wobei zum Einstellen der Position der Schwinge (470) die Schwinge um die Drehachse (R) durch das elektromotorische Antriebselement (472) in Drehung versetzt werden kann, wobei optional das elektromotorische Antriebselement (472) oder ein mit der Drehachse verbundenes Verbindungselement (673) des elektromotorischen Antriebselements eine rotatorische Bewegung oder eine translatorische Bewegung ausführen kann, die über die Drehachse in eine Drehung der Schwinge (470) übersetzt werden kann.

4. Tragplattenlinienverteiler (100) nach Anspruch 3, wobei die Schwinge (470) einen Führungsarm (676) umfasst, der mit dem Führungselement (132) in Wechselwirkung treten kann, um die Tragplatte (131) vom einspurigen Bereich auf eine Spur des mehrspurigen Bereichs zu verteilen, und wobei die Schwinge (470) ein Gegengewicht (677) umfasst, das auf einer dem Führungsarm (676) gegenüberliegenden Seite der Drehachse (R) angeordnet ist, wobei optional der Massenschwerpunkt der Schwinge (470) in einem Abstand zur Drehachse (R) angeordnet ist, der weniger als 20% oderweniger 10% einer maximalen Ausdehnung der Schwinge (470) in einer Richtung senkrecht zur Drehachse beträgt.

5. Tragplattenlinienverteiler (100) nach einem der Ansprüche 2 bis 4, wobei das elektromotorische Antriebselement (472) einen Stellantrieb oder einen Servomotor umfasst.

6. Tragplattenlinienverteiler (100) nach Anspruch 1, wobei das Schaltelement (270) wenigstens zwei Elektromagnete (871, 872, 873) umfasst, wobei jeweils ein Elektromagnet genau einer Spur (851, 852, 853) des mehrspurigen Bereichs zugeordnet ist und wobei die wenigstens zwei Elektromagnete (871, 872, 873) angesteuert werden können, um eine elektromagnetische Kraft auf ein magnetisches Material (833) der Tragplatte (131) zu bewirken, um die Tragplatte von dem einspurigen Bereich auf eine Spur des mehrspurigen Bereichs zu verteilen.

7. Tragplattenlinienverteiler (100) nach Anspruch 6, wobei das Führungselement (832) das magnetische Material (833) umfasst.

8. Tragplattenlinienverteiler (100) nach Anspruch 6 oder 7, wobei die wenigstens zwei Elektromagnete (871, 872, 873) an der Führung (805) angeordnet sind.

9. Tragplattenlinienverteiler (100) nach Anspruch 1, wobei das Schaltelement wenigstens zwei magnetische Elemente (971, 972, 973) umfasst, wobei jeweils ein magnetisches Element (971, 972, 973) genau einer Spur des mehrspurigen Bereichs zugeordnet ist, und wobei die Tragplatte (131) einen Elektromagneten (933) umfasst, der angesteuert werden kann, um durch Wechselwirkung mit wenigstens einem der wenigstens zwei magnetischen Elemente (971, 972, 973) die Tragplatte (131) von dem einspurigen Bereich auf eine Spur (951, 952, 953) des mehrspurigen Bereichs zu verteilen.

10. Tragplattenlinienverteiler (100) nach einem der Ansprüche 1 bis 9, wobei der Tragplattenlinienverteiler (100) eine Erkennungseinrichtung (181) zum Erkennen einer Position und/oder eines Identifikationselements (190) der Tragplatte (131) stromauf der Schaltweiche (261) umfasst und wobei der Tragplattenlinienverteiler (100) weiterhin eine Steuereinheit (180) umfasst, die ausgebildet ist, das Verteilen der Tragplatte (131) basierend auf der erkannten Position und/oder dem erkannten Identifikationselement (190) zu steuern.

11. Tragplattenlinienverteiler (100) nach einem der Ansprüche 1 bis 10, wobei der mehrspurige Bereich (152) wenigstens drei oder wenigstens vier Spuren (153, 154, 155) umfasst.

12. Tragplattenlinienverteiler (100) nach einem der Ansprüche 1 bis 11, wobei eine Ausdehnung des Fördergurtes (101) in Förderrichtung (T) größer ist als die Ausdehnung der Führung (105) in Förderrichtung (T).

13. Tragplattenlinienverteiler (100) nach einem der Ansprüche 1 bis 11, wobei der Tragplattenlinienverteiler (100) weiterhin einen Rückführbereich (1053) umfasst, in dem die Tragplatte (131) nach Passieren des mehrspurigen Bereichs (1052) wieder zum einspurigen Bereich (1051) zurückgeführt werden kann, wobei der Rückführbereich (1053) optional eine zweite Führung umfasst, die eine Position der Tragplatte quer zur Förderrichtung auf eine dem einspurigen Bereich entsprechende Position zurückführt.

14. Tragplattenlinienverteiler (100) nach einem der Ansprüche 1 bis 13, wobei der Tragplattenlinienverteiler (100) eine Vielzahl von Tragplatten (131) umfassen und wobei die Schaltweiche (261) ausgestaltet ist, das Verteilen durch Bewirken einer elektromagnetischen Kraft auf eine aktuelle Tragplatte (131) und/oder das Schaltelement (270) zu bewirken, nachdem eine vorauseilende Tragplatte das Schaltelement passiert hat.

15. Verfahren zum Verteilen von Fördergut (130) von einer Spur (151) auf mehrere Spuren (153, 154, 155) mittels eines Tragplattenlinienverteilers (100) gemäß einem der Ansprüche 1 bis 14, wobei das Verfahren ein Befördern der Tragplatte (131) von dem einspurigen Bereich (151) über die Schaltweiche (261) in eine Spur (153, 154, 155) des mehrspurigen Bereichs (152) umfasst und wobei das Verfahren ein Verteilen der Tragplatte (131) auf eine Spur des mehrspurigen Bereichs durch Bewirken einer elektromagnetischen Kraft auf die Tragplatte (131) und/oder ein Schaltelement (270) der Schaltweiche (261) umfasst.
